(19)

Europäisches Patentamt
European Patent Office
Office européen des brevets

(11) **EP 2 600 354 A2**

(12) **EUROPEAN PATENT APPLICATION**

(43) Date of publication:
**05.06.2013  Bulletin 2013/23**

(51) Int Cl.:
***G21K 1/06*** *(2006.01)*

(21) Application number: **12008083.3**

(22) Date of filing: **03.12.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **02.12.2011  JP 2011265070**

(71) Applicant: **Canon Kabushiki Kaisha**
**Ohta-ku**
**Tokyo (JP)**

(72) Inventors:
 • **Okamoto, Kohei**
  **Tokyo (JP)**

 • **Komoto, Atsushi**
  **Tokyo (JP)**
 • **Kubo, Wataru**
  **Tokyo (JP)**
 • **Miyata, Hirokatsu**
  **Tokyo (JP)**
 • **Noma, Takashi**
  **Tokyo (JP)**

(74) Representative: **Weser, Wolfgang**
**Weser & Kollegen**
**Patentanwälte**
**Radeckestrasse 43**
**81245 München (DE)**

(54)  **X-ray waveguide and X-ray waveguide system**

(57)   In an X-ray waveguide including a cladding (701, 702) and a core to guide an X-ray, the core includes a periodic structure of plural substances (703, 704) having different values of a refractive-index real part in a direction perpendicular to an X-ray guiding direction. A Bragg angle determined depending on an X-ray wavelength and periodicity of the periodic structure is smaller than a critical angle for total reflection of the X-ray at a core-cladding interface. The Bragg angle is larger than a critical angle for total reflection of the X-ray at an interface between the plural substances constituting the periodic structure. The core has, in the X-ray guiding direction, two or more regions (705, 706) differing in periodic number of the periodic structure constituting the core with a core width in a direction of period being different between the two or more regions corresponding to change of the periodic number.

FIG. 7

EP 2 600 354 A2

## Description

BACKGROUND OF THE INVENTION

Field of the Invention

The present invention relates to an X-ray waveguide and an X-ray waveguide system including an X-ray source and an X-ray waveguide. The X-ray waveguide according to an embodiment of the present invention can be used, for example, in X-ray optical systems for, e.g., X-ray analysis technology, X-ray imaging technology, and X-ray exposure technology, and further used as an X-ray optical component employed in the X-ray optical systems.

Description of the Related Art

When handling an electromagnetic wave having a short wavelength of several tens nm or less, a difference in refractive index between different substances is very small for such an electromagnetic wave. Therefore, a critical angle for the total reflection and a refraction angle with respect to an interface between the different substances are also very small. For that reason, hitherto, a large-sized spatial optical system has mainly been used to control the electromagnetic wave having the short wavelength, and it is still the mainstream. Examples of primary components constituting the large-sized spatial optical system are a crystal mirror and a multilayer mirror in which materials having different refractive indices are alternately laminated. The multilayer mirror has various functions, such as beam shaping, conversion of a spot size, and wavelength selection.

In contrast to the spatial optical system described above, a component using an X-ray waveguide, such as a known polycapillary, is to propagate an X-ray while confining the X-ray in the waveguide. Furthermore, studies have recently been made on an X-ray waveguide that propagates an electromagnetic wave while confining it in a thin film or a multilayer film, aiming at size reduction and higher performance of an optical system. An X-ray waveguide having the most basic structure is a single mode waveguide in which a sufficiently thin air layer serving as a core is sandwiched between cladding layers. The single mode waveguide can form an X-ray in a waveguide mode that has spatial coherence in a direction perpendicular to a guiding direction of the X-ray. However, the single mode waveguide has a drawback that a core thickness is very thin to satisfy single mode conditions of the waveguide and an amount of X-ray capable of being actually propagated per unit time is small. To cope with such a problem, an X-ray waveguide having a tapered shape is proposed which concentrates an X-ray in a core with a very small width by gradually reducing the core width of the waveguide and gradually converting mixed multiple waveguide modes (see Optics Communications, Volume 281, Issue 10, p. 2779(2008)). Another X-ray waveguide is also proposed in which a cladding is periodically formed in a guiding direction such that only a particular waveguide mode is resonant with the waveguide to be selectively guided, thus enabling a single waveguide mode to be formed even in a core having a wide cross-section (see Optics Letters, Volume 36, Number 14, p. 2602(2011)).

However, the X-ray waveguides proposed in those related-art technical documents have the following problems.

The X-ray waveguide proposed in the first mentioned document is intended to form a quasi-point light source near an output end of the waveguide. For that purpose, many different waveguide modes mixed in a core region having a wide cross-section are gradually concentrated into a core region having a narrow cross-section. While the core cross-section of the waveguide is gradually reduced, plural waveguide modes are formed in a complexly mixed state near the output end of the waveguide instead of being a single waveguide mode, and they are not spatially in phase over the core cross-section. In other words, a single waveguide mode having spatial coherence cannot be formed.

The X-ray waveguide proposed in the second mentioned document is intended to selectively guide one objective waveguide mode that is to be selectively propagated. That X-ray waveguide is designed such that, by periodically forming the cladding in the guiding direction, only the objective waveguide mode being resonant with the period is caused to totally reflect at an interface between the core and the cladding, whereas other waveguide modes are not resonant with that period. The waveguide modes other than the objective waveguide mode are radiated in portions where the cladding is not formed, whereby only the objective waveguide mode can be propagated. However, because the waveguide mode is basically formed by the X-ray repeating total reflection at the entire interface between the core and the cladding extending in the guiding direction, the X-ray in the objective waveguide mode is partially radiated to the outside of the core of the waveguide in the portions where the cladding is not formed. Accordingly, a large propagation loss is generated, and selectivity of the objective waveguide mode with respect to the other waveguide modes reduces.

SUMMARY OF THE INVENTION

The present invention in its first aspect provides an X-ray waveguide as specified in claims 1 to 8.

The present invention in its second aspect provides an X-ray waveguide system as specified in claim 9.

Further features of the present invention will become apparent from the following description of exemplary embodiments with reference to the attached drawings.

BRIEF DESCRIPTION OF THE DRAWINGS

Fig. 1A is a schematic view representing a fundamental vector when a periodic structure has just a one-dimensional periodic structure in a waveguide cross-section, Fig. 1B is a schematic view representing fundamental vectors when the periodic structure has a two-dimensional periodic structure in the waveguide cross-section, and Fig. 1C is a schematic view representing fundamental vectors when the periodic structure has another two-dimensional periodic structure in the waveguide cross-section.
Fig. 2 is a schematic view representing the relationship between a periodic structure made up of equi-period planes and an X-ray to explain a Bragg angle that is approximately defined.
Fig. 3 is an illustration representing the relationship among an effective propagation angle of a waveguide mode in an X-ray waveguide, a wavevector in a guiding direction, i.e., a propagation constant, and a wavevector in vacuum.
Fig. 4 is a schematic sectional view to explain definition of the Bragg angle when the X-ray waveguide includes claddings opposed parallel to each other.
Fig. 5 is a schematic perspective view representing one basic form of the X-ray waveguide capable of forming a periodic resonant waveguide mode.
Fig. 6 is a graph representing, based on calculation, the relationship between a propagation loss and an effective propagation angle of each waveguide mode in the one basic form of the X-ray waveguide capable of forming the periodic resonant waveguide mode.
Fig. 7 is a schematic sectional view representing a structure of an X-ray waveguide according to one embodiment of the present invention.
Figs. 8A and 8B are illustrations to explain the relationship between an X-ray confining direction and change in periodic number of a periodic structure constituting a core in an X-ray waveguide according to one embodiment of the present invention.
Fig. 9 is a schematic sectional view representing a structure of an X-ray waveguide of EXAMPLE 1.
Fig. 10A is a schematic perspective view representing a structure of an X-ray waveguide of EXAMPLE 3, and Fig. 10B is a schematic view representing a part of a distribution, taken in a waveguide cross-section, of electric field intensity of a period resonant waveguide mode that is formed in the X-ray waveguide of EXAMPLE 3.
Fig. 11A is a schematic perspective view representing a structure of an X-ray waveguide of EXAMPLE 4, and Fig. 11B is a schematic view representing a part of a distribution, taken in a waveguide cross-section, of electric field intensity of a period resonant waveguide mode that is formed in the X-ray waveguide of EXAMPLE 4.
Fig. 12 is a graph plotting transmittance of an X-ray with respect to an incidence angle when a plane wave is incident upon an end surface of the X-ray waveguide of EXAMPLE 1.
Fig. 13 is a schematic sectional view representing an example of an X-ray waveguide in which two or more regions where the core has different periodic numbers from each other are periodically arranged in a guiding direction of the X-ray.
Fig. 14 is a graph representing dependency of transmittance on an incidence angle in a z-direction on a y-z plane when an X-ray having photon energy of 8 keV is incident upon an end surface of the X-ray waveguide of EXAMPLE 5.
Figs. 15A and 15B are each a schematic sectional view to explain an example in which total reflection at a core-cladding interface is repeated.
Fig. 16 is a schematic sectional view representing a structure of the X-ray waveguide of EXAMPLE 5.

DESCRIPTION OF THE EMBODIMENTS

An embodiment of the present invention will be described in detail below.
An X-ray waveguide according to the embodiment of the present invention includes a cladding and a core, which are configured to guide an X-ray. The core includes a periodic structure made up of plural substances each having a different value of a real part of refractive index and arrayed in a direction perpendicular to a guiding direction of the X-ray. Furthermore, a Bragg angle determined depending on a wavelength of the X-ray and periodicity of the periodic structure is smaller than a critical angle for total reflection of the X-ray at an interface between the core and the cladding. The Bragg angle is larger than a critical angle for total reflection of the X-ray at an interface between the plural substances constituting the periodic structure.
The X-ray waveguide according to the embodiment is further featured in that the core has two or more regions differing in periodic number of the periodic structure constituting the core (in the X-ray guiding direction), and that a core width in a direction of period is different between the two or more regions corresponding to change of the periodic number. Typically, the two or more regions differing in periodic number of the periodic structure are arranged in the X-ray guiding direction.

Stated another way, the X-ray waveguide according to the embodiment is featured in that the periodic structure constituting the core has, in the X-ray guiding direction, regions differing in periodic number in a cross-section of the core, and that the core width in the cross-section is changed corresponding to change of the periodic number.

Stated still another way, the X-ray waveguide according to the embodiment has two features as follows. First, looking at a repetition unit of the periodic structure constituting the core, there is a portion where a repetition number (equivalent to a periodic number) changes in the X-ray guiding direction. Secondly, the number of repetition units of the core also changes corresponding to the change of the repetition number (periodic number). The repetition units are repeated in a direction perpendicular to the X-ray guiding direction.

In the present disclosure, the term "X-ray" implies an electromagnetic wave in a wavelength range where a real part of the refractive index of a substance has a value of 1 or less. More specifically, the term "X-ray" implies an electromagnetic wave in a wavelength range of 100 nm or shorter (including Extreme Ultra Violet (EUV) light). A frequency of the electromagnetic wave having such a short wavelength is very high and an outermost electron of a substance is not responsible to that electromagnetic wave. It is hence known that a real part of the refractive index of a substance has a value of smaller than 1 for the X-ray unlike for electromagnetic waves (visible light and infrared light) in a frequency band where wavelengths are not shorter than that of ultraviolet light. A refractive index n of a substance for the above-mentioned X-ray is generally expressed by the following formula (1):

$$n = 1 - \delta - i\beta' = n' - i\beta' \qquad (1)$$

Thus, the refractive index n is expressed using a deviation $\delta$ of the real part of the refractive index from 1, and an imaginary part $\beta'$ of the refractive index, which is related to attenuation of the X-ray in the substance. Such attenuation can be regarded as absorption of the X-ray in the substance in many cases. Because $\delta$ is proportional to an electron density $\rho_e$ of the substance, the real part n' of the refractive index has a smaller value as the substance has a larger electron density. Furthermore, as seen from the formula (1), the real part n' of the refractive index is expressed by:

$$n' = (1 - \delta)$$

Moreover, the electron density $\rho_e$ is proportional to an atomic density $\rho_a$ and an atomic number Z. Thus, in the present disclosure, the expression "two or more substances each having a different value of a real part of refractive index" implies two or more substances having different electron densities in many cases. As mentioned above, the refractive index of a substance for the X-ray is expressed by a complex number. In this specification, a real part of the complex number is also called a "refractive-index real part", and an imaginary part of the complex number is also called a "refractive-index imaginary part".

Absorption of the X-ray in a substance depends on the electron density of the substance. Therefore, when a vacuum state is regarded as being filled with a substance having a certain refractive index, a real part of that refractive index is maximized to 1. In the present disclosure, accordingly, vacuum is defined as one substance with its refractive-index real part having a value of 1 and its refractive-index imaginary part having a value of 0.

The X-ray waveguide according to the embodiment includes the core and the cladding. The X-ray waveguide confines the X-ray in the core by total reflection at the interface between the core and the cladding, thereby forming a waveguide mode for propagation of the X-ray therethrough. To realize the confining of the X-ray by the total reflection, the X-ray waveguide according to the embodiment is constructed such that the refractive-index real part of the cladding for the X-ray is smaller than the refractive-index real part of each of all substances constituting the core.

The X-ray in a waveguide mode formed in the X-ray waveguide according to the embodiment is guided in an extending direction of the core, and such a direction is called a "(X-ray) guiding direction" in this specification. The guiding direction is parallel to a propagation constant of the waveguide mode. Furthermore, in this specification, a cross-section perpendicular to the guiding direction is called a "waveguide cross-section".

The core of the X-ray waveguide according to the embodiment includes a periodic structure in which plural substances each having a different value of a real part of refractive index are periodically arrayed in the waveguide cross-section. The periodic structure has one- or two-dimensional periodicity in the waveguide cross-section. A Bragg angle $\theta_B$ can be defined corresponding to a period for each dimension. The Bragg angle in the embodiment is given as a Bragg angle of the lowest order. When the periodic structure has one-dimensional periodicity in the waveguide cross-section, one Bragg angle is defined. When the periodic structure has two-dimensional periodicity in the waveguide cross-section, one or more Bragg angles are defined.

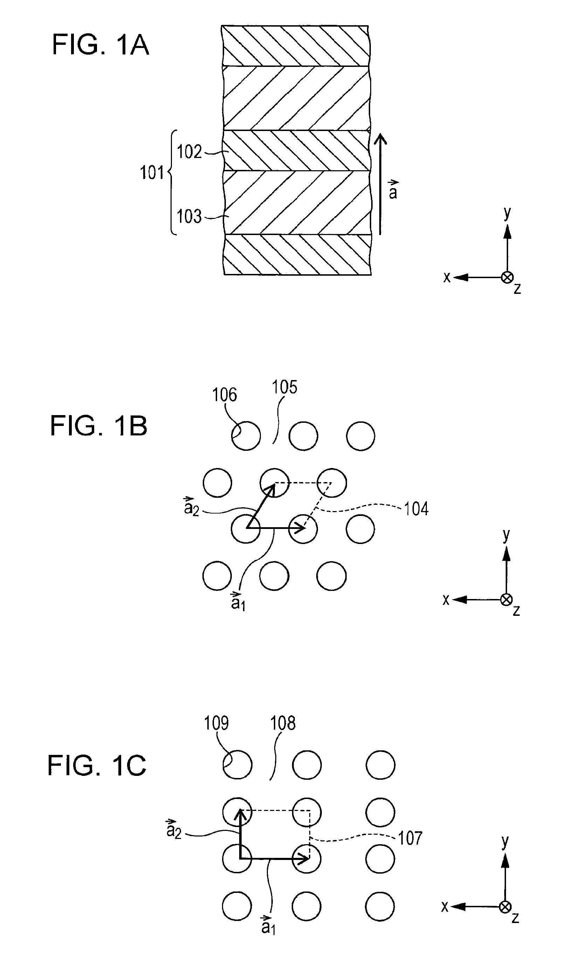

Fig. 1A illustrates an example of a one-dimensional periodic structure, and Figs. 1B and 1C illustrate examples of a two-dimensional periodic structure. Numerals 102, 105 and 108 each denote a substance having a smaller value of the refractive-index real part among substances constituting the corresponding periodic structure, and numerals 103, 106 and 109 each denote a substance having a larger value of the refractive-index real part among substances constituting the corresponding periodic structure. The periodic structures are each made of those two substances and include, e.g., unit lattices 101, 104 and 107, respectively. As represented by arrows in Figs. 1A to 1C, a fundamental vector

$$\vec{a}$$

can be defined in the periodic structure of Fig. 1A, fundamental vectors

$$\vec{a}_1, \ \vec{a}_2$$

can be defined in the periodic structure of Fig. 1B, and fundamental vectors

$$\vec{a}_1, \ \vec{a}_2$$

can be defined in the periodic structure of Fig. 1C. When the periodicity of the periodic structure is two-dimensional as in Figs. 1B and 1C, fundamental vectors of the periodic structure can be determined in various ways insofar as the fundamental vector represents the periodicity. In this specification, however, two of possible plural fundamental vectors, which have the smallest absolute value or have the smallest and second smallest absolute values, are taken as two fundamental vectors representing the two-dimensional periodic structure. Given that a certain vector thus determined is

$$\vec{a}_i$$

and its magnitude is

$$\left|\vec{a}_i\right|,$$

a period (lattice constant) of periodicity in a direction parallel to

$$\vec{a}_i$$

is given by:

$$\left|\vec{a}_i\right|$$

Such a fundamental vector

$$\vec{a}_i$$

implies a one-dimensional periodic structure having a period of:

$$\left|\vec{a}_i\right|$$

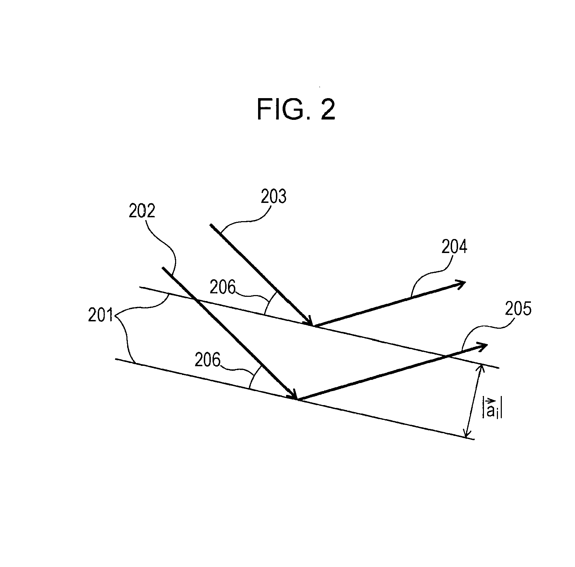

That one-dimensional periodic structure can approximately be regarded as a structure in which, as illustrated in Fig. 2, an equi-period plane 201 representing periodicity in the one-dimensional direction is one-dimensionally arrayed at a period of:

$$\left|\vec{a}_i\right|$$

On that occasion, the refractive index of a medium filling a space between the equi-period planes is regarded as an average refractive index of substances constituting the periodic structure. A model of causing the X-ray to enter such a structure is well known in crystal analysis in which a diffraction direction is detected by applying the X-ray to a crystal. Thus, the Bragg angle of the periodic structure in the embodiment for the X-ray can be considered similarly to the concept of the Bragg angle in X-ray optics regarding a crystal that is a periodic structure. The Bragg angle in the embodiment is given as an angle with respect to the equi-period plane. In Fig. 2, for example, a condition that the X-ray entering the equi-period plane 201 at an incidence angle 206 is strongly Bragg-reflected as a result of interference in the periodic structure provides a condition that reflected X-rays 204 and 205 of incident X-rays 202 and 203 intensify each other. Given that the incidence angle resulting when the above-mentioned condition is satisfied is a Bragg angle $\theta_B$, the Bragg angle $\theta_B$ determined depending on the wavelength of the X-ray and the periodicity of the periodic structure can be expressed by the following formula (4);

$$\theta_B \approx arcsin\left(\frac{1}{\tilde{n}}\frac{\lambda}{2\left|\vec{a}_i\right|}\right) \quad (4)$$

where $\lambda$ is the wavelength of the X-ray, and

$$\tilde{n}$$

is the average refractive index of the periodic structure. It is to be noted that because the above discussion is based on the approximation model, the Bragg angle described above slightly differs from the Bragg angle having an angle range, which is obtained with an actual X-ray diffraction experiment, but it is used as the Bragg angle in this specification for explanation of the present invention.

Since the periodic structure is formed by a periodic array of plural substances, the periodic structure includes interfaces between the plural substances. Those interfaces are present between the substances each having a different value of a real part of refractive index. Therefore, when the X-ray impinges against the interface from the substance exhibiting a larger value of the refractive-index real part to the substance exhibiting a smaller value of the refractive-index real part, there is an incidence angle range where the X-ray is totally reflected. A critical angle for the total reflection of the X-ray is defined for such an interface as well. Given that n'$_{high}$ is the refractive-index real part of the substance exhibiting the larger value of the refractive-index real part among two substances, which constitute the interface in the periodic structure, and n'$_{low}$ is the refractive-index real part of the substance exhibiting the smaller value of the refractive-index real part among the two substances, a critical angle $\theta_{C\text{-}in}$ for the total reflection of the X-ray at the above-mentioned surface, i.e., at the interface between the plural substances constituting the periodic structure, can be expressed by:

$$\theta_{c-in} = cos^{-1}\left(\frac{n'_{low}}{n'_{high}}\right)$$

In this specification, the critical angle for the total reflection is defined as an angle measured from the interface.

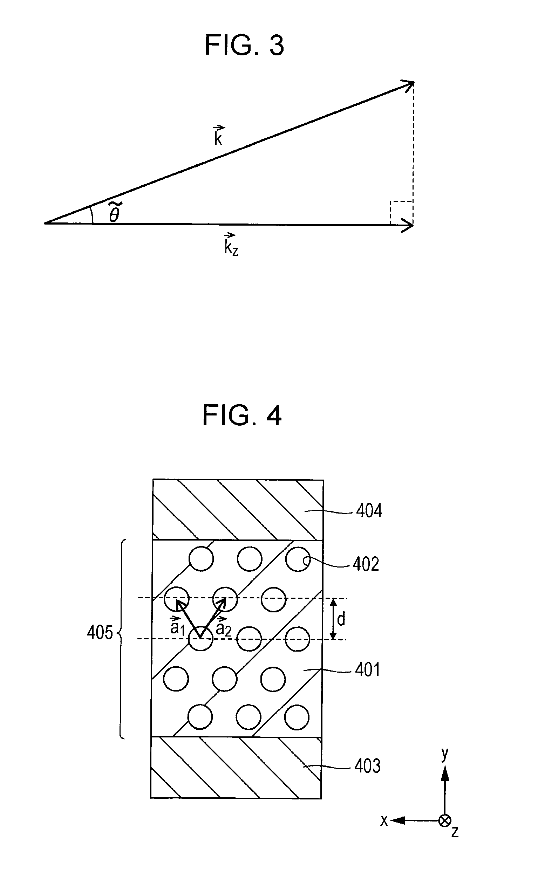

Approximately supposing that a waveguide mode is formed by interference of one fundamental wave, as illustrated in Fig. 3, an effective propagation angle of the fundamental wave in each waveguide mode (i.e., an angle formed between a wavevector in vacuum and a wavevector in the guiding direction)

$$\widetilde{\theta}$$

is defined, as the angle formed between the wavevector in vacuum

$$\vec{k}$$

and the wavevector in the guiding direction

$$\vec{k}_z \, ,$$

by the following formula (6);

$$\widetilde{\theta} = cos^{-1}\left(\frac{\beta}{|\vec{k}|}\right) \quad (6)$$

where β is the propagation constant of the waveguide mode and is expressed by:

$$\beta = \left|\vec{k}_z\right|$$

Te X-ray waveguide according to the embodiment is to guide the X-ray while confining therein a propagation mode that is obtained based on multiple interference in the periodic structure, and that is resonant with the periodic structure. The effective propagation angle in the resonance mode corresponds to a minimum angle in the angle range of Bragg reflection. In other words, in order that the X-ray in the resonance mode exists within the periodic structure of the X-ray waveguide according to the embodiment, the X-ray having the effective propagation angle of

$$\widetilde{\theta},$$

which is about $\theta_B$, has to be not totally reflected at the interface in the periodic structure. Thus, the structure of the X-ray waveguide according to the embodiment has to satisfy a condition expressed by the following formula (7):

$$\theta_{C-in} \; < \; \theta_B \qquad\qquad (7)$$

The condition of the above formula (7) implies that the Bragg angle $\theta_B$ determined depending on the wavelength of the X-ray and the periodicity of the periodic structure is larger than the critical angle for the total reflection of the X-ray at the interface between the plural substances constituting the periodic structure.

Given that a refractive-index real part of a substance on the cladding side at the interface between the core and the cladding is $n_{clad}$ and a refractive-index real part of a substance on the core side at the interface is $n_{core}$, a critical angle $\theta_c$ for the total reflection measured with respect to a direction parallel to a film surface is expressed by the following formula (8) on condition of $n_{clad} < n_{core}$:

$$\theta_c = arccos\left( \frac{n_{clad}}{n_{core}} \right) \qquad (8)$$

Because the core of the X-ray waveguide according to the embodiment is made of the periodic structure having a very small period, the X-ray seeps into the periodic structure from the interface between the core and the cladding when the X-ray is totally reflected. In practice, therefore, the critical angle for the total reflection at the interface between the core and the cladding has a value slightly shifting from that based on the above formula (8), which is determined just from the refractive-index real part of the cladding constituting the interface between the core and the cladding and the refractive-index real part of the core constituting the interface. However, the critical angle for the total reflection expressed by the above formula (8) is advantageously used as a guideline angle in designing the X-ray waveguide according to the embodiment. In order that the X-ray waveguide according to the embodiment satisfies the condition of the formula (7) and guides the X-ray while confining, in the core, the propagation mode resonant with the periodicity of the periodic structure of the core, the X-ray having the effective propagation angle of

$$\widetilde{\theta},$$

which is about $\theta_B$, has to be totally reflected when impinging against the interface between the core and the cladding from the core. Thus, a condition expressed by the following formula (9) has to be satisfied;

$$\theta_B \; < \; \theta_C \qquad\qquad (9)$$

The condition of the above formula (9) implies that the Bragg angle $\theta_B$ determined depending on the wavelength of the X-ray and the periodicity of the periodic structure is smaller than the critical angle for the total reflection of the X-ray at the interface between the core and the cladding. When the X-ray waveguide according to the embodiment is constructed so as to satisfy the conditions of the formulae (7) and (9), the embodiment can form the waveguide mode, which is resonant with the periodicity of the periodic structure of the core. That waveguide mode is called a "periodic resonant waveguide mode" in this specification.

When, in the X-ray waveguide according to the embodiment, the claddings are a pair of claddings opposed parallel to each other, the Bragg angle corresponding to the periodicity of the periodic structure of the core in the direction perpendicular to the interface between the core and the cladding is regarded as the Bragg angle in the formula (7). For the sake of explanation, Fig. 4 illustrates an example of the X-ray waveguide in which a core 405 is formed as a region sandwiched between claddings 403 and 404 opposed parallel to each other. The core 405 is constituted by a periodic structure in which, with the X-ray guiding direction defined as a z-direction, vacant pores 402 extending in the X-ray guiding direction are arrayed within a substance 401, which exhibits a smaller value of the refractive-index real part, in the form of two-dimensional periodic structure having a triangular lattice pattern in a waveguide cross-section. In such a periodic structure, the fundamental vectors determined as described above in connection with the definition of the Bragg angle are given by

$$\vec{a}_1$$

and

$$\vec{a}_2$$

in Fig. 4. However, because the X-ray waveguide according to the embodiment is constituted by the pair of claddings opposed to each other, in the formula (4),

$$|\vec{a}_i| \text{ is not } |\vec{a}_1| (\text{or } |\vec{a}_2|),$$

and it is replaced with a period d corresponding to periodicity in the direction perpendicular to the interface between the core and the cladding. By thus defining the Bragg angle depending on cases, the X-ray waveguide according to the embodiment satisfies the formulae (7) and (9) and can form the periodic resonant waveguide mode regardless of whether the X-ray is confined in a one-dimensional direction or two-dimensional directions.

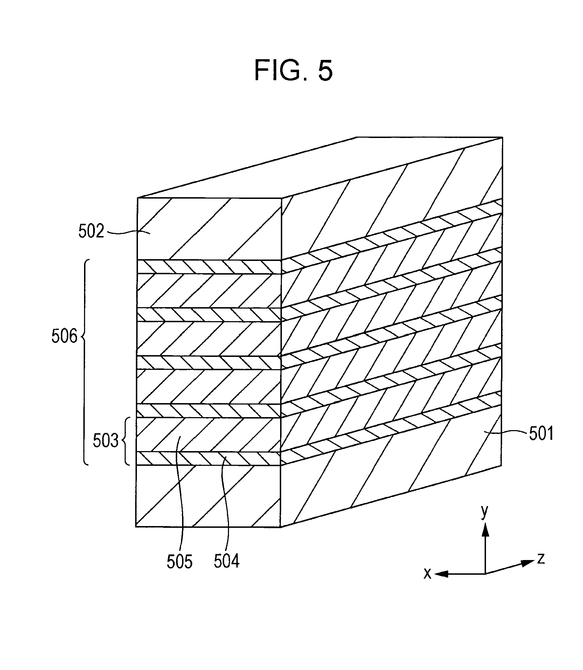

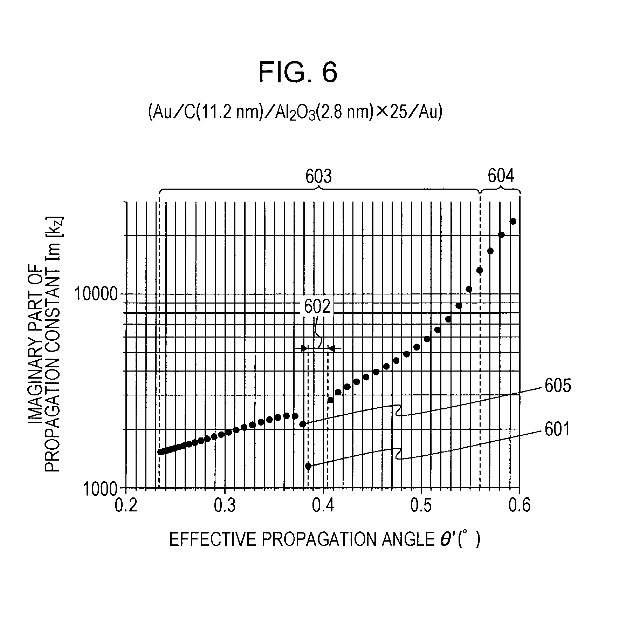

Fig. 5 illustrates an exemplary structure of the X-ray waveguide according to the embodiment. In the illustrated structure, a core 506 is sandwiched between claddings 501 and 502 each made of gold (Au). The core 506 is a one-dimensional periodic structure in the form of a multilayer film in which aluminum oxide ($Al_2O_3$) 504 having a thickness of 2.8 nm and carbon (C) 505 having a thickness of 11.2 nm are periodically alternately laminated. Stated another way, a unit structure 503 made of the aluminum oxide ($Al_2O_3$) 504 and the carbon (c) 505 is laminated in plural. The periodic structure has a periodic number of 25 and a period of 14 nm. Portions of the multilayer film, which contact with the claddings 502 and 501, are made of carbon. In Fig. 5, the X-ray guiding direction is defined as the z-direction. Fig. 6 plots dependency of a propagation loss of each waveguide mode possibly formed in the X-ray waveguide upon the effective propagation angle of each waveguide mode. Fig. 6 represents results of calculation performed for an X-ray having photon energy of 8 keV in accordance with the finite element method. In a graph of Fig. 6, the vertical axis indicates the propagation loss of the waveguide mode as the imaginary part of the propagation constant, and the horizontal axis indicates the effective propagation angle of the waveguide mode. An angle range 603 represents an angle range where the X-ray is confined in the waveguide and the waveguide mode is formed. An angle range 604 represents an angle range in excess of the critical angle for the total reflection at the interface between the core and the cladding, i.e., an angle range where the X-ray is not confined in the waveguide. As seen from Fig. 6, the lower the order of waveguide mode at the smaller effective propagation angle, the smaller is the propagation loss of the waveguide mode. As the effective propagation angle of the waveguide mode increases, the propagation loss also increases. It is further seen that such a tendency is greatly broken near a Bragg angle range 602 in Fig. 6. In particular, the propagation loss of the waveguide mode having the effective propagation angle, which corresponds to a minimum angle of the Bragg angle range 602, is significantly reduced. The reduced propagation loss is denoted by a point 601 in the graph of Fig.

6, and it represents the propagation loss of the periodic resonant waveguide mode. The periodic resonant waveguide mode is a mode most strongly resonant with the periodic structure, and its electromagnetic field is concentrated in the substance exhibiting the larger value of the refractive-index real part within the periodic structure, i.e., in a carbon portion. In the X-ray band, generally, as a substance takes a larger value of the refractive-index real part, the substance takes a smaller value of the refractive-index imaginary part (loss such as absorption). Thus, due to the fact that the electromagnetic field of the periodic resonant waveguide mode is concentrated in the portion exhibiting a smaller loss, e.g., smaller absorption, and that an enveloping curve or an enveloping surface of the electromagnetic field is localized to a center of the core and seeping of the electromagnetic field to the claddings is reduced, the propagation loss of the periodic resonant waveguide mode is significantly reduced in comparison with that in other waveguide modes. Such a result implies that, among the waveguide modes formed in the waveguide, the periodic resonant waveguide mode becomes a dominant waveguide mode, and that even when the core having a wide cross-section is used as in the X-ray waveguide according to the embodiment, a high-order waveguide mode can be guided with high selectivity. As the selectivity increases, unity of the waveguide mode increases and spatial coherence of the waveguide mode in the waveguide cross-section also increases. In the example of the X-ray waveguide illustrated in Fig. 5, since the core is the one-dimensional periodic structure, coherence of the guided X-ray is increased in a one-dimensional direction, i.e., a y-direction in Fig. 5. When the core is a two-dimensional periodic structure in the waveguide cross-section, the periodic resonant waveguide mode is formed as a waveguide mode that is controlled over an entire cross-section of the core, and that has high spatial coherence in the two-dimensional directions.

As seen from Fig. 6, however, the propagation loss of a waveguide mode having an effective propagation angle, denoted by a point 605, near the effective propagation angle of the periodic resonant waveguide mode on the smaller angle side is also reduced in comparison with the propagation losses of other waveguide modes. Stated another way, as seen from Fig. 6, the waveguide mode, denoted by the point 605, adjacent to the periodic resonant waveguide mode on the smaller angle side in terms of the effective propagation angle also tends to be relatively easily selected as the waveguide mode. It is known that, although the propagation loss of the periodic resonant waveguide mode can be further reduced by increasing the periodic number of the periodic structure to a certain extent, the above-mentioned adjacent waveguide mode is also reduced at the same time. To attenuate the adjacent waveguide mode in such a state, a length of the waveguide in the guiding direction, i.e., a guiding distance, has to be prolonged. However, prolonging the length of the waveguide greatly attenuates the periodic resonant waveguide mode as well.

To reduce the selectivity of the adjacent waveguide mode and to further increase the selectivity of the periodic resonant waveguide mode as the objective waveguide mode in the short guiding distance, the X-ray waveguide according to the embodiment is featured in that the X-ray waveguide includes a region where the periodic number of the periodic structure in the waveguide cross-section is changed in the X-ray guiding direction, and that the core width in the waveguide cross-section is changed corresponding to the change of the periodic number. Unlike the periodic resonant waveguide mode, the adjacent waveguide mode is not a waveguide mode that is resonant with the periodicity of the periodic structure, and it is a waveguide mode that is resonant with the core width on condition that the entire core is formed as a uniform medium. Therefore, when the core width with which the adjacent waveguide mode is resonant is abruptly changed during propagation of the adjacent waveguide mode in the X-ray guiding direction after being formed in the waveguide, the adjacent waveguide mode attenuates because it can no longer be resonant with the core width after being changed. In contrast, the periodic resonant waveguide mode is a waveguide mode that is resonant with the periodicity of the periodic structure of the core. Therefore, even when the core width is abruptly changed during a propagation process, the periodic resonant waveguide mode can continuously propagate while being resonant with the core in the form of the periodic structure on condition that the change of the core width is due to change of the periodic number of the periodic structure. In other words, it is possible to attenuate the adjacent waveguide mode and to increase the selectivity of the periodic resonant waveguide mode as the objective waveguide mode by changing the periodic number of the periodic structure constituting the core in the guiding direction and by changing the core width corresponding to the change of the periodic number. Strictly speaking, when the change of the periodic number is exactly matched with an integer time of the period, the embodiment operates in an optimum condition. However, for the reason that the resonance condition of the adjacent waveguide mode is determined by only the core width, whereas the resonance condition of the periodic resonant waveguide mode is determined from the periodicity of the periodic structure rather than the core width, the change of the core width in the embodiment is not exactly required to be natural-number times the period. Thus, a slight deviation attributable to, e.g., a manufacturing error, is allowed, and such a deviation does not degrade the advantageous effect of the embodiment. In a portion where the core width is changed, the core width may be discontinuously or continuously changed in the guiding direction.

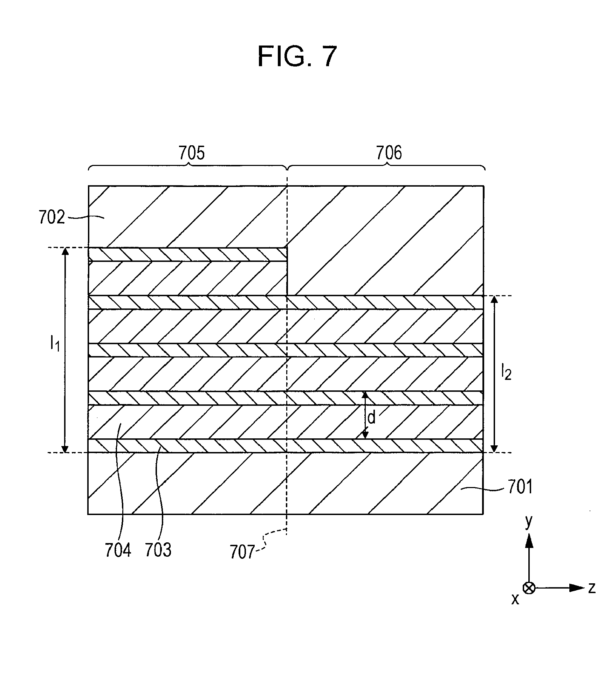

As a simple example, Fig. 7 illustrates a structure of an X-ray waveguide in which a periodic structure constituting a core is a one-dimensional periodic structure and the core is sandwiched between two claddings. The core is the one-dimensional periodic structure in which a substance 704 exhibiting a relatively large value of the refractive-index real part and a substance 703 exhibiting a relatively small value of the refractive-index real part are one-dimensionally periodically laminated in the y-direction. Numerals 701 and 702 denote a lower cladding and an upper cladding, respectively. The X-ray guiding direction is the z-direction. The X-ray waveguide of this example is constructed with satisfaction of the formulae (7) and (9), and it is able to form the periodic resonant waveguide mode. The periodic number of the periodic structure is reduced by one in the guiding direction before and after a periodic number changing boundary denoted by a dotted line 707. Not only the periodic resonant waveguide mode, but also the adjacent waveguide mode being resonant with a core width $l_1$ and generating a comparatively small propagation loss can be present in a region 705 before the change of the periodic number, which is positioned before the dotted line 707, in the guiding direction. However, in a region 706 after the change of the periodic number, which is positioned after the dotted line 707, in the guiding direction, the core width becomes $l_2$, whereby the adjacent waveguide mode being resonant with the core width $l_1$ can no longer be resonant with the core width $l_2$ and it gradually attenuates. On the other hand, the X-ray in the periodic resonant waveguide mode can be continuously resonant with the periodicity of the periodic structure for further propagation because the periodicity of the periodic structure other than the periodic number is not changed between before and after the dotted line 707.

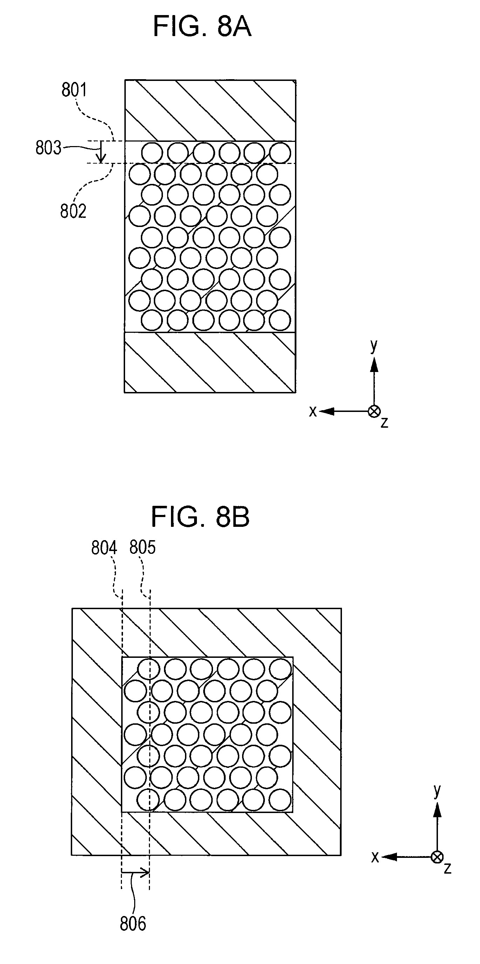

When the cladding of the X-ray waveguide is a pair of claddings opposed parallel to each other, the change of the periodic number of the periodic structure constituting the core is set in the direction perpendicular to the interface between the core and the cladding. Otherwise, the change of the periodic number may be set in the direction of a fundamental vector as a target or in the direction of higher periodicity. For example, Figs. 8A and 8B illustrate respectively a waveguide cross-section of an X-ray waveguide in which the X-ray is confined in a one-dimensional direction inside a two-dimensional periodic structure constituting a core, and a waveguide cross-section of an X-ray waveguide in which the X-ray is confined in two-dimensional directions. In the X-ray waveguide of Fig. 8A, the direction in which the X-ray is confined by the total reflection at the interface between the core and the cladding is parallel to the y-direction. Therefore, the X-ray waveguide according to the embodiment can be constructed by setting a portion enabling the periodic number in the y-direction to be increased or decreased in the guiding direction. In Fig. 8A, the above-described portion may be set, for example, by abruptly changing an interface 801 between the core and the cladding to 802 in the guiding direction as denoted by an arrow 803. In the X-ray waveguide of Fig. 8B in which the X-ray is confined in the two-dimensional directions, the above-described portion may be set, for example, by abruptly changing an interface 804 between the core and the cladding, the interface 804 being parallel to the y-direction, to 805 in the guiding direction as denoted by an arrow 806. Particularly, in the X-ray waveguide in which the X-ray is confined in the two-dimensional directions, the periodic number may be changed in plural directions instead of changing it only in one direction.

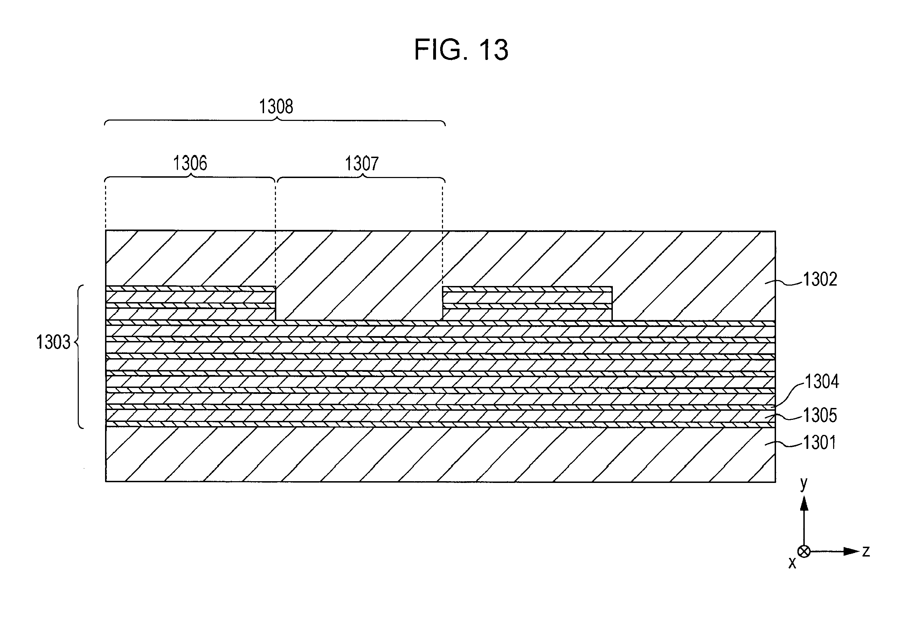

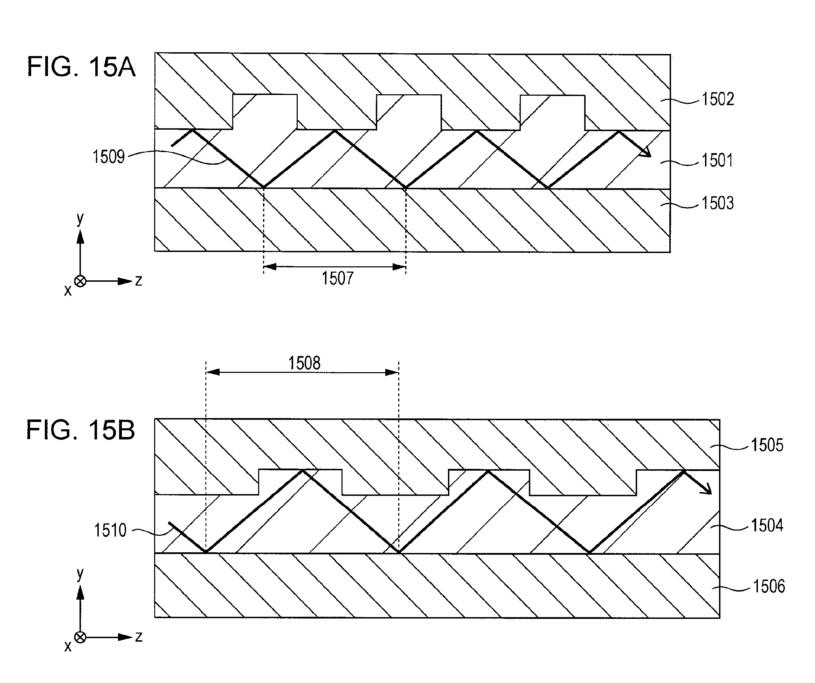

Moreover, in the X-ray waveguide according to the embodiment, two or more regions where the core has different periodic numbers from each other are periodically arranged in the X-ray guiding direction. Stated another way, in the X-ray waveguide according to the embodiment, a portion having a different periodic number in the waveguide cross-section, i.e., a portion in which the core width in the waveguide cross-section is changed, is periodically arranged in the X-ray guiding direction. With such an arrangement, the selectivity of the periodic resonant waveguide mode can be further increased. Detailed description is made below with reference to Fig. 13. Fig. 13 illustrates an X-ray waveguide in which a core 1303 is sandwiched between claddings 1301 and 1302, and an X-ray guiding direction is the z-direction. Numerals 1304 and 1305 denote respectively a layer made of a substance exhibiting a relatively large value of the refractive-index real part and a substance exhibiting a relatively small value of the refractive-index rear part. A unit 1308 made up of a larger periodic number region 1306 with a periodic number of 100 and a smaller periodic number region 1307 with a periodic number of 80 is periodically arranged at a period 1308 in the guiding direction. Thus, in the entire X-ray waveguide, the periodic number of the core is periodically changed in the guiding direction. Because the regions differing in periodic number are periodically arranged in plural, selection of the periodic resonant waveguide mode and forced attenuation of other waveguide modes are repeated, whereby the selectivity of the periodic resonant waveguide mode can be increased. Furthermore, because the fundamental wave forming each waveguide mode periodically repeats the total reflection at the interface between the core and the cladding, it is possible to cause, in the guiding direction as well, resonation of the periodic resonant waveguide mode with the period of the core in the guiding direction and to further increase the selectivity of the periodic resonant waveguide mode by setting a repetition period of the total reflection of the periodic resonant waveguide mode in the guiding direction to be matched with the period of the core regions differing in periodic number in the guiding direction (i.e., the period of the two or more regions in the X-ray guiding direction where the core has different periodic numbers from each other, those regions being periodically arranged in the guiding direction). With attention focused on one X-ray fundamental wave forming the periodic resonant waveguide mode, the repetition period of the total reflection will be described below with reference to Figs. 15A and 15B. Figs. 15A and 15B are simplified views of X-ray waveguides according to the embodiment, which include respectively cores 1501 and 1504 and pairs of claddings 1502, 1503 and 1505, 1506, each pair of the cladding sandwiching one core. In both the X-ray waveguides of Figs. 15A and 15B, a core width is periodically changed in a guiding direction that is the z-direction. Arrows 1509 and 1510 represent respectively behaviors of typical fundamental waves, which form the periodic resonant waveguide modes in the waveguides of Figs. 15A and 15B, and which repeat the total reflection at the interface between the core and the cladding. In the waveguide of Fig. 15A, the fundamental wave is represented as repeating the total reflection at the interface between the core and the cladding in the smaller periodic number region. On the other hand, in the waveguide of Fig. 15B, the fundamental wave is represented as repeating the total reflection at the interface between the core and the cladding in the larger periodic number region. In the cases of Figs. 15A and 15B, the repetition periods of the total reflection in the guiding direction are 1507 and 1508, respectively. Any one of those two repetition periods may be used as the repetition period of the total reflection in this specification. The periodic resonant waveguide mode is efficiently selected by making the above-described repetition period of the total reflection matched with the period at which the core width is changed. In other words, the waveguide modes in the X-ray waveguides are controlled based on both the y-directional periodicity of the core and the periodicity in the guiding direction. Moreover, the period of the periodic-number changed portions of the core in the guiding direction (i.e., the period of the two or more regions in the X-ray guiding direction where the core has different periodic numbers from each other, those regions being periodically arranged in the guiding direction) is advantageously a value obtained by multiplying or dividing the repetition period of the total reflection of the periodic resonant waveguide mode in the guiding direction by a natural number, specifically, in the range of 1/100 to 10 times.

The cladding of the X-ray waveguide according to the embodiment is advantageously made of a material having a high electron density. Examples of such a material include Au, W, Ta, Pt, Ir and Os. The cladding of the X-ray waveguide can be formed by forming a film of such a material by, e.g., sputtering.

The periodic structure constituting the core of the X-ray waveguide according to the embodiment may be formed of a periodic multilayer film in which plural substances each having a different value of a real part of refractive index are one-dimensionally periodically laminated. The substances forming the periodic multilayer film are advantageously selected from, e.g., Be, B, C, $B_4C$, BN, SiC, $Sl_3N_4$, SiN, $Al_2O_3$, MgO, $TiO_2$, $SiO_2$, and P. A multilayer film, which serves as a one-dimensional periodic structure constituting the core, can be formed by periodically laminating the selected substances by, e.g., sputtering. In an advantageous embodiment, the thickness of each of films forming the periodic multilayer film is constant in the X-ray guiding direction. It is to be noted that the thickness of each film is not required to be exactly constant and an error within a practically non-problematic range is of course allowed.

Alternatively, the X-ray waveguide according to the embodiment may be constructed by forming the periodic multilayer film, which provides the periodic structure constituting the core, as a mesostructured material (lamellar film) having a lamellar structure. The term "mesostructured material" in the embodiment implies a periodic structure that is made of an organic-inorganic hybrid material, that is formed by self-assembly of a surfactant, and that has a structure period of 2 to 50 nm. There are mesostructured materials having structure periodicity in various meso-scales. Typical examples of inorganic components of the mesostructured materials are oxides, such as $SiO_2$, $TiO_2$, $SnO_2$, and $ZrO_2$. Of the mesostructured materials, a lamellar film having a one-dimensional periodic structure provides the lamellar structure that is a layered structure made of two different types of substances. Those two types of substances include a substance primarily containing an inorganic component and a substance primarily containing an organic component. The substance primarily containing an inorganic component and the substance primarily containing an organic component may be bonded to each other as required. One practical example of the bonded mesostructured material is a mesostructured material prepared from a siloxane compound to which an alkyl group is bonded. Such a lamellar film can be formed on a substrate by the sol-gel method, for example. The structure period of the lamellar film can be adjusted to a desired value, as appropriate, depending on the type and the concentration of the surfactant used, reaction conditions, etc. Because the lamellar film is formed in the one-dimensional periodic structure by self-organization in one step, time and labor necessary for a fabrication step can be greatly cut. When the lamellar film is used as the one-dimensional periodic structure that constitutes the core of the X-ray waveguide according to the embodiment, a propagation loss of the X-ray due to absorption, which causes the propagation loss of the X-ray in the formed periodic resonant waveguide mode, can be reduced because one type of the substances constituting the lamellar film is an organic substance absorbing the X-ray in a less amount.

The X-ray waveguide according to the embodiment can be formed by constructing, as a mesostructured material made of a mesoporous material, the periodic structure that constitutes the core of the X-ray waveguide according to the embodiment. In the mesostructured material made of the mesoporous material, pores or voids are periodically arrayed in a homogeneous medium. Therefore, that mesostructured material functions as a refractive-index periodic structure in which portions having different refractive indices for the X-ray are periodically arrayed. The mesostructured material made of the mesoporous material and constituting the core of the X-ray waveguide according to the embodiment has two-dimensional periodicity in the waveguide cross-section. Typical examples of that mesostructured material include a two-dimensional periodic structure in which pores extending in the guiding direction are arrayed in the form of two-dimensional periodic structure having a triangular lattice pattern in the waveguide cross-section, and a three-dimensional periodic structure in which voids are arrayed in a hexagonal close-packed structure. Regardless of whether the mesostructured material made of the mesoporous material is the two-dimensional or three-dimensional periodic structure, the structure has two-dimensional periodicity in the waveguide cross-section of the X-ray waveguide. The interiors of pores or voids in the mesoporous material may be filled with a liquid or a solid regardless of whether the liquid or the solid is an organic substance or an inorganic substance, without being limited to the pores or the voids which are filled with gas, e.g., air, or vacuum.

When, in a mesoporous material including pores in a two-dimensional array, the pores have periodicity in only a one-dimensional direction in the waveguide cross-section, such a mesoporous material can be regarded as a periodic multilayer film in which an average refractive index of a medium and the pores is periodically changed in the aforesaid one-dimensional direction. In that case, by employing such a mesoporous material as the one-dimensional periodic structure to constitute the core, the X-ray waveguide according to the embodiment can also be formed as in the case using the above-described periodic multilayer film.

In a mesoporous material in which pores are two-dimensionally periodically arrayed in the waveguide cross-section, because the pores are uniaxially oriented in a direction parallel to the guiding direction, the X-ray in the periodic resonant waveguide mode formed in the waveguide is able to propagate through a two-dimensional periodic structure that is invariable in the guiding direction. On that occasion, a mode pattern of the periodic resonant waveguide mode is controlled in two-dimensional directions to be resonant with two-dimensional periodicity of the mesoporous material in the waveguide cross-section. In such a mode pattern, an electromagnetic field of the periodic resonant waveguide mode is concentrated in the substance contained in the periodic structure, which substance exhibits a larger value of the refractive-index real part and a smaller absorption loss, in the waveguide cross-section. As a result, the propagation loss of the periodic resonant waveguide mode is reduced. Moreover, the periodic resonant waveguide mode in the waveguide cross-section becomes coherent over the entire cross-section of the core because a phase of the periodic resonant waveguide mode is controlled by the two-dimensional periodic structure.

A mesostructured material made of a mesoporous material and being a three-dimensional periodic structure in which voids are three-dimensionally arrayed can also be used as the core of the X-ray waveguide according to the embodiment. In that case, the periodic resonant waveguide mode can be controlled by periodicity in the guiding direction in addition to the above-described control of the periodic resonant waveguide mode by the two-dimensional periodicity in the waveguide cross-section, the latter control being described above in connection with the case where the mesoporous material has the two-dimensional periodic structure. Therefore, temporal phase change of the periodic resonant waveguide mode can be controlled.

A method of preparing the mesostructured material in the embodiment is not limited to particular one. For example, the mesostructured material is prepared by adding a precursor of an inorganic oxide to a solution of an amphipathic substance (especially a surfactant) which functions as an aggregate, by forming a film, and by proceeding with a production reaction of the inorganic oxide.

An additive for adjusting the structure period may be added along with the surfactant. The additive for adjusting the structure period is, e.g., a hydrophobic substance. Examples of the hydrophobic substance include alkanes and aromatic compounds containing no hydrophilic groups. One practical example is octane.

The precursor of the inorganic oxide is, e.g., an alkoxide or a chloride of silicon or a metal element. More practical examples of the precursor include alkoxides and chlorides of Si, Sn, Zr, Ti, Nb, Ta, Al, W, Hf and Zn. Examples of the alkoxides include methoxide, ethoxide, propoxide, and the formers partly replaced with alkyl groups. A film forming method can be performed as, e.g., dip coating, spin coating, or hydrothermal synthesis.

The mesostructured material can be controlled in its structure by appropriately changing the materials and process conditions in the above-described preparation process. When the mesoporous material having the two-dimensional periodic structure with uniaxial orientation is prepared, a step of forming, e.g., a polyimide film with uniaxial orientation, which is obtained through a rubbing step, on a substrate is added as a pre-process of the above-described preparation process.

Regardless of which material is used to form the periodic structure that constitutes the core of the X-ray waveguide according to the embodiment, it is possible to minimize the X-ray in the adjacent waveguide mode and to guide the X-ray in the periodic resonant waveguide mode with high selectivity by providing, in the guiding direction, the portion in which the periodic number of the periodic structure in the waveguide cross-section is changed and in which the core width is also changed corresponding to the change of the periodic number. Thus, the X-ray guided in the periodic resonant waveguide mode has high spatial coherence over a large width of the core in the one-dimensional direction when the periodic structure of the core has the one-dimensional periodicity, and over an entire wide cross-section of the core in the two-dimensional directions when the periodic structure of the core has the two-dimensional periodicity.

An X-ray waveguide system according to an embodiment of the present invention will be described below. The X-ray waveguide system according to the embodiment includes at least an X-ray source and an X-ray waveguide. The X-ray source used here may be an X-ray source emitting an X-ray in a general X-ray band with wavelength of 1 pm or longer to 100 nm or shorter. The X-ray emitted from the X-ray source may have a single wavelength or a certain width of wavelength. The X-ray source and the X-ray waveguide are arranged such that the X-ray emitted from the X-ray source enters the X-ray waveguide. The X-ray waveguide can be provided as the above-described X-ray waveguide. In the X-ray waveguide system, another member (e.g., a multilayer film mirror) may be disposed between the X-ray source and the X-ray waveguide. Furthermore, the X-ray waveguide system may be constructed such that the X-ray outputting from the X-ray waveguide enters another member.

EXAMPLE 1

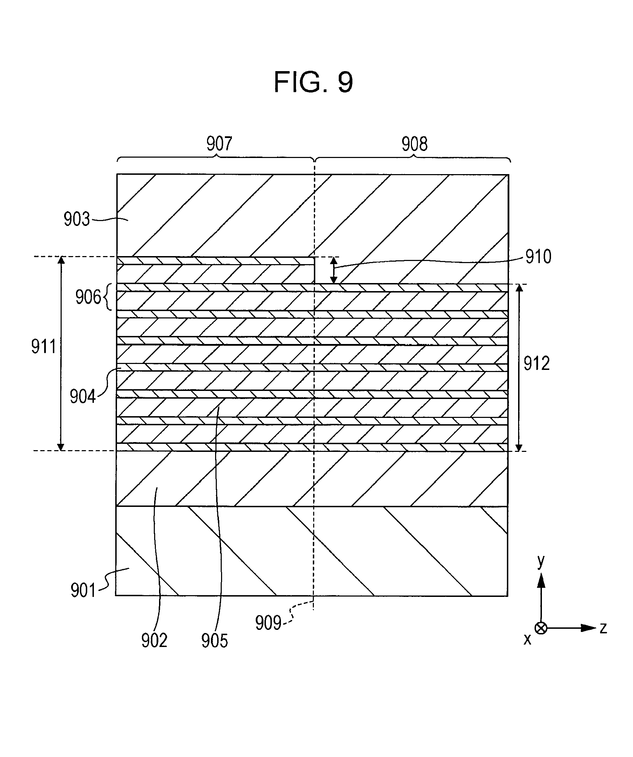

One example of the X-ray waveguide according to the embodiment of the present invention will be described below as EXAMPLE 1 with reference to Fig. 9. An X-ray guiding direction in the X-ray waveguide of Fig. 9 is defined as the z-direction, a +y direction is defined to be the upper side, and a -y direction is defined to be the lower side. In the X-ray waveguide of Fig. 9, a core in the form of a periodic multilayer film is sandwiched between a lower cladding 902 made of tungsten (W), which is formed on a silicon (Si) substrate 901 and has a thickness of about 20 nm, and an upper cladding 903 made of tungsten (W). In the periodic multilayer film serving as the core, a unit structure 906 is laminated in plural in the y-direction, the unit structure 906 including a carbon (C) layer 905 with a thickness of 12 nm and an aluminum-oxide ($Al_2O_3$) layer 904 with a thickness of 3 nm. Stated another way, the C layer 905 and the $Al_2O_3$ layer 904 are one-dimensionally periodically laminated in the y-direction, thereby providing a one-dimensional periodic structure. The one-dimensional periodic structure has a period of 15 nm, and its lowermost and uppermost layers are each an $Al_2O_3$ layer. A dotted line 909 denotes a periodic number changing boundary. The periodic number of the periodic multilayer film is 50 in a region 907 before change of the periodic number, and 45 in a region 908 after change of the periodic number. Corresponding to the change of the periodic number, a core width in the y-direction is also changed from a width 911 to 912. Such a change 910 of the core width corresponds to 5 periods of the periodic multilayer film, i.e., 75 nm. It is to be noted that, although the change 910 of the core width is drawn corresponding to one period in Fig. 9 for the sake of simplification, the change 910 actually corresponds to 5 periods in the embodiment. Thus, the thickness of the cladding 903 is 20 nm and 95 nm, respectively, in the region 907 before change of the periodic number and the region 908 after change of the periodic number. The lengths of the region 907 before change of the periodic number and the region 908 after change of the periodic number in the guiding direction are each 0.5 mm.

A step of laminating the individual layers of the X-ray waveguide is performed by sputtering. The sputtering is carried out to form the lower cladding 902 on the Si substrate 901, and further to form a periodic multilayer film having the core width 911 and the periodic number of 50 on the lower cladding 902. In this stage, the periodic multilayer film is partly removed by photolithography and etching to form the region 908 after change of the periodic number where the periodic number of the periodic multilayer film is reduced by 5, thus providing the periodic number changing boundary 909.

In the X-ray waveguide of EXAMPLE 1, a Bragg angle obtained from the relationship between an X-ray having photon energy of 10 keV and periodicity of the periodic multilayer film is about 0.3(°), a critical angle for the total reflection of that X-ray at each interface inside the periodic multilayer film is about 0.084(°), and a critical angle for the total reflection at the interface between the core and the cladding is about 0.38(°). Accordingly, the X-ray waveguide of EXAMPLE 1 satisfies the formulae (7) and (9) described above in this specification, and it can form the periodic resonant waveguide mode that is resonant with the one-dimensional periodic structure.

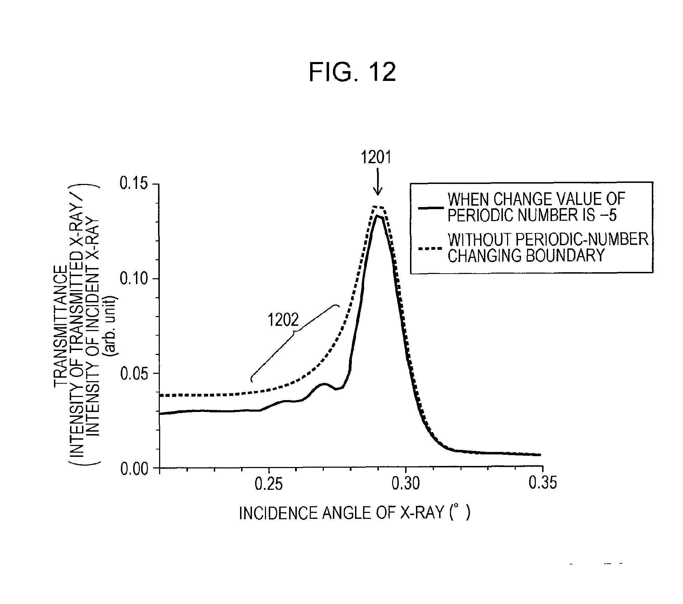

When an X-ray is incident upon the core at an end surface of the region 907 before change of the periodic number in a y-z plane at an incidence angle of about 0.3(°) relative to the guiding direction, plural waveguide modes are excited. However, X-rays in the waveguide modes having larger propagation losses attenuate more quickly while propagating in the guiding direction. Because, of the plural waveguide modes, the periodic resonant waveguide mode has a significantly small propagation loss, the X-ray in the periodic resonant waveguide mode is gradually selected in comparison with the other waveguide modes while propagating in the guiding direction. In the region 907 before change of the periodic number, however, because the propagation losses of the waveguide modes adjacent to the periodic resonant waveguide mode are relatively small, X-rays in those adjacent waveguide modes may also exist. Thus, in the region 907 before change of the periodic number ahead of the periodic number changing boundary 909 in the z-direction, the X-rays in the periodic resonant waveguide mode and the adjacent waveguide modes are present in a mixed state. The adjacent waveguide modes present in that state are waveguide modes being resonant with the core width 911. Therefore, when the X-rays in the adjacent waveguide modes exceed the periodic number changing boundary 909 in the z-direction and enter the region 908 after change of the periodic number where the core has the different width, those X-rays attenuate abruptly because they can no longer be resonant with the core width 912 after the change. In contrast, the periodic resonant waveguide mode is resonant with the periodicity of the periodic structure. Thus, since the periodicity other than the periodic number is kept unchanged in both the region 907 before change of the periodic number and the region 908 after change of the periodic number, the periodic resonant waveguide mode is highly selected as a waveguide mode having a small propagation loss in the region 908 after change of the periodic number as well, and the X-ray in the waveguide mode having high unity can continuously propagate through the region 908. Fig. 12 is a graph plotting transmittance of an X-ray with respect to an incidence angle when a plane wave is incident upon the end surface of the X-ray waveguide of EXAMPLE 1. A curve denoted by a dotted line and a curved denoted by a solid line represent transmittances, respectively, when there is no periodic number changing boundary and when the periodic number is reduced by 5 at the periodic number changing boundary. A peak denoted by an arrow 1201 indicates strong selective transmission of the X-ray in the periodic resonant waveguide mode. When the periodic number is not changed, transmission of the X-rays in the adjacent waveguide modes appear in a range denoted by 1202. On the other hand, in the X-ray waveguide of EXAMPLE 1 in which the periodic number is reduced by 5, the transmission of the X-rays in the adjacent waveguide modes in the range 1202 is suppressed as seen from Fig. 12. Thus, because the periodic resonant waveguide mode has high unity, the X-ray obtained near an output end of the X-ray waveguide of EXAMPLE 1 has coherence over the core having the large width 911 in the y-direction and a long spatial coherence length.

EXAMPLE 2

Another example of the X-ray waveguide according to the embodiment of the present invention will be described below as EXAMPLE 2. In the X-ray waveguide of EXAMPLE 2, the periodic multilayer film constituting the core of the X-ray waveguide of EXAMPLE 1 is replaced with a mesostructured material having a lamellar structure. The X-ray waveguide of EXAMPLE 2 is described with reference to Fig. 9 as in EXAMPLE 1. The mesostructured material having the lamellar structure, used in EXAMPLE 2, is a lamellar film formed, by the sol-gel method, on a tungsten (W) layer that is formed in turn on a Si substrate. The lamellar film has such a structure that a silica ($SiO_2$) layer with a thickness of about 3 nm and an organic substance layer with a thickness of about 7 nm are one-dimensionally periodically laminated in the y-direction. In the X-ray waveguide of EXAMPLE 2, a Bragg angle obtained from the relationship between an X-ray having photon energy of 10 keV and periodicity of the lamellar film is about 0.37(°), a critical angle for the total reflection of that X-ray at each interface inside the lamellar film is about 0.1(°), and a critical angle for the total reflection at the interface between the core and the cladding is about 0.4(°). Accordingly, the X-ray waveguide of EXAMPLE 2 satisfies the formulae (7) and (9) described above in this specification, and it can form the periodic resonant waveguide mode that is resonant with the one-dimensional periodic structure. In EXAMPLE 2, particularly, since the core is constituted as the lamellar film and the X-ray in the periodic resonant waveguide mode propagates in such a distribution that the X-ray is strongly concentrated in the organic substance layer in the waveguide cross-section, the propagation loss can be reduced. The periodic number of the lamellar film is 48 in the region 907 before change of the periodic number, and 46 in the region 908 after change of the periodic number. Thus, the periodic number is changed by 2 at the periodic number changing boundary 909, and the core width is changed from 911 to 912 by about 20 nm. As in EXAMPLE 1, since the X-rays in the adjacent waveguide modes attenuate and the X-ray in the periodic resonant waveguide mode propagates while being strongly selected in the region after the periodic number changing boundary 909, an X-ray having high unity and a long spatial coherence length can be obtained.

EXAMPLE 3

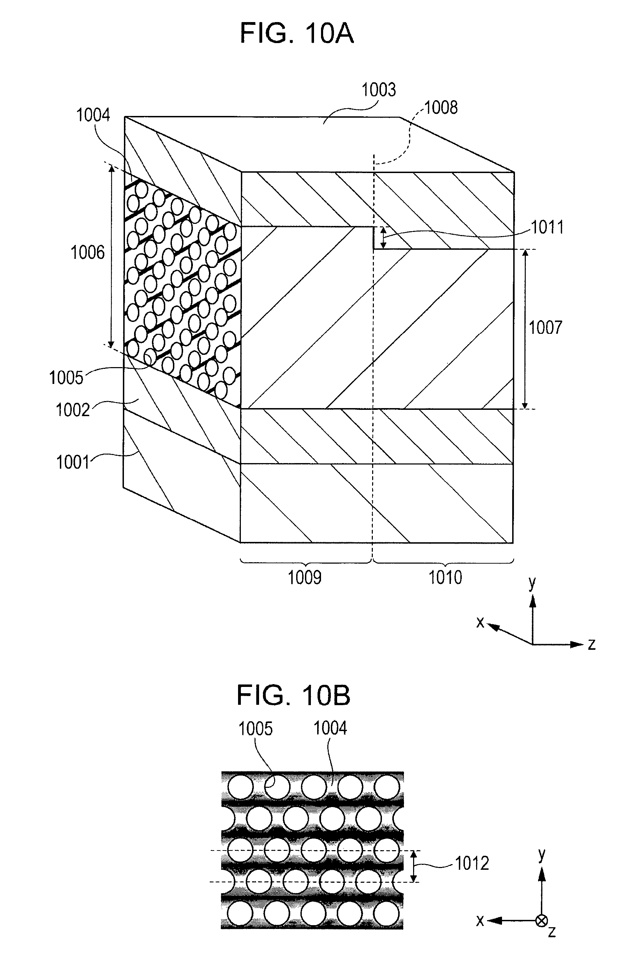

Still another example of the X-ray waveguide according to the embodiment of the present invention will be described below as EXAMPLE 3 with reference to Fig. 10A. In the X-ray waveguide of EXAMPLE 3, the periodic structure constituting the core of the X-ray waveguide of EXAMPLE 1 is constituted as a mesostructured material made of a mesoporous material. The mesoporous material used in EXAMPLE 3 has such a structure that, within silica ($SiO_2$) 1004, pores 1005 filled with an organic substance and extending in the guiding direction (z-direction) are arrayed in two-dimensional directions in the waveguide cross-section. However, the pores in the mesoporous silica are not uniaxially oriented, and they have periodicity only in the y-direction in EXAMPLE 3. Thus, the mesoporous silica can be regarded as an approximate periodic multilayer film in which two layers of the silica and the pores, having different average electron densities, are one-dimensionally periodically laminated in the y-direction. In the X-ray waveguide of EXAMPLE 3, the mesoporous silica is sandwiched in the y-direction between a lower cladding 1002 made of tungsten (W), which is formed on a Si substrate 1001 and has a thickness of about 40 nm, and an upper cladding 1003 made of tungsten (W). A Bragg angle obtained from the relationship between an X-ray having photon energy of 8 keV and periodicity of the mesoporous silica, i.e., the approximate periodic multilayer film, is about 0.41(°), a critical angle for the total reflection of that X-ray at each interface inside the approximate periodic multilayer film is about 0.13(°), and a critical angle for the total reflection at the interface between the core and the cladding is about 0.52(°). Accordingly, the X-ray waveguide of EXAMPLE 3 satisfies the formulae (7) and (9) described above in this specification, and it can form the periodic resonant waveguide mode that is resonant with the one-dimensional periodic structure. The lengths of a region 1009 before change of the periodic number and a region 1010 after change of the periodic number in the guiding direction are each 0.5 mm. Fig. 10B illustrates a part of the core of the X-ray waveguide of EXAMPLE 3 in the waveguide cross-section. A solid line in Fig. 10B represents a boundary of the periodic structure. A whiter region represents a portion where electric field intensity of the periodic resonant waveguide mode is larger, and a blacker region represents a portion where electric field intensity of the periodic resonant waveguide mode is smaller. As seen from Fig. 10B, although the core has a two-dimensional periodic structure in its cross-section, a periodic resonant waveguide mode being resonant with the one-dimensional periodic structure is formed like the periodic resonant waveguide mode in the one-dimensional periodic multilayer film. As in EXAMPLES 1 and 2, the X-ray waveguide of EXAMPLE 3 also has a periodic number changing boundary 1008, as denoted by a dotted line in Fig. 10A, at which the periodic number of the approximate one-dimensional periodic multilayer film is changed in the guiding direction. Dotted lines in Fig. 10B represent equi-period planes of the one-dimensional periodic structure in the y-direction, and an interval between the equi-period planes, i.e., a period 1012, is about 10 nm. In Fig. 10A, the periodic number in the y-direction is 49 in the region 1009 before change of the periodic number, and is 44 in the region 1010 after change of the periodic number. The core width in the y-direction is changed from 1006 to 1007 between both the sides of the periodic number changing boundary 1008, as denoted by 1011 that corresponds to 5 periods. Thus, because the core width is changed in the guiding direction, the waveguide modes other than the periodic resonant waveguide mode attenuate abruptly in the region 1010 after change of the periodic number. As a result, the X-ray in the periodic resonant waveguide mode can be propagated with higher selectivity. In other words, an X-ray having high unity and a long spatial coherence length over a large core width can be formed.

EXAMPLE 4

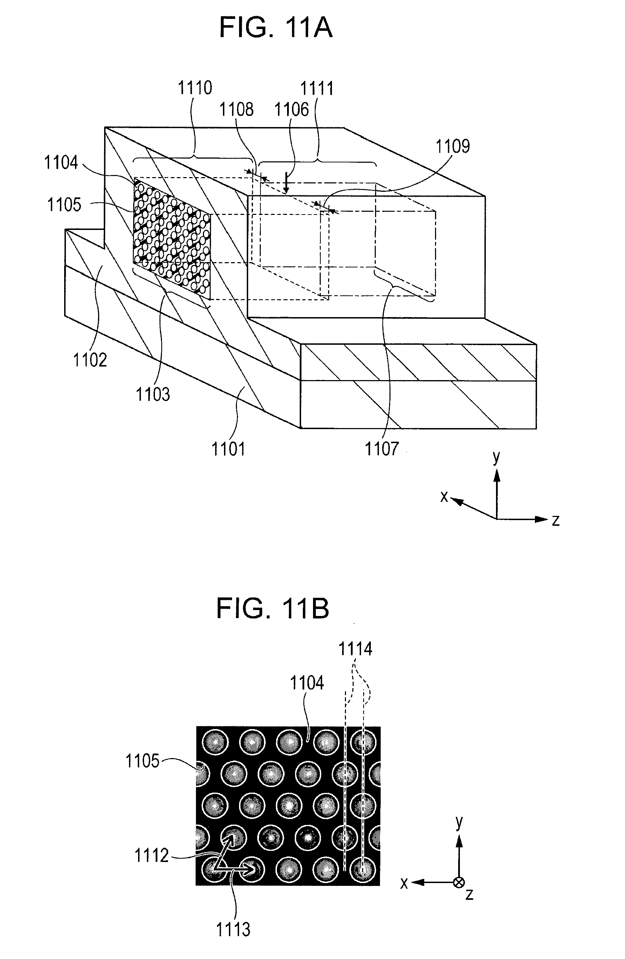

Still another example of the X-ray waveguide according to the embodiment of the present invention will be described below as EXAMPLE 4 with reference to Fig. 11A. A core of the X-ray waveguide of EXAMPLE 4 is constituted as a mesostructured material made of a mesoporous material that is mesoporous silica. The mesoporous material provides a two-dimensional periodic structure in which, within silica 1104, pores 1105 filled with air and extending in the guiding direction (z-direction) are arrayed in the form of two-dimensional periodic structure having a triangular lattice pattern in a waveguide cross-section. In a part of a core cross-section illustrated in Fig. 11B, a solid line represents a boundary of the periodic structure, and two arrows 1112 and 1113 represent two fundamental vectors of the two-dimensional periodic structure, respectively. The magnitude of each fundamental vector is about 16.2 nm. In the X-ray waveguide of EXAMPLE 4, a cladding 1102 made of tungsten (W) surrounds, on a Si substrate 1101, a core formed by the mesoporous silica in two-dimensional directions in the waveguide cross-section. With such an arrangement, EXAMPLE 4 includes two pairs of interfaces between the core and the cladding, i.e., one pair of interfaces parallel to a y-z plane and the other pair of interfaces parallel to a z-x plane. For an X-ray having photon energy of 8 keV, a critical angle for the total reflection at the interface between the core and the cladding is about 0.52(°). A Bragg angle obtained from the relationship between that X-ray and the magnitude of the fundamental vector of the periodic structure in the waveguide cross-section is about 0.32(°), and a critical angle for the total reflection at the interface between the pore 1105 occupied with air and the silica 1104 is about 0.2(°). Accordingly, the X-ray waveguide of EXAMPLE 4 can form the periodic resonant waveguide mode. In EXAMPLE 4, since the core is surrounded at four sides by the cladding, the X-ray is confined in two-dimensional directions in the waveguide cross-section, and the confined X-ray is resonant with the two-dimensional periodic structure, thereby forming the periodic resonant waveguide mode. Thus, the periodic resonant waveguide mode in EXAMPLE 4 is controlled in the two-dimensional directions in the waveguide cross-section. In Fig. 11B, a whiter region represents a portion where electric field intensity of the periodic resonant waveguide mode is larger, and a blacker region represents a portion where electric field intensity of the periodic resonant waveguide mode is smaller. As seen from Fig. 11B, the periodic resonant waveguide mode formed in the X-ray waveguide of EXAMPLE 4 is strongly resonant with the two-dimensional periodic structure, and its electromagnetic field is concentrated in the pores occupied with air exhibiting a small loss. This implies that the propagation loss of the periodic resonant waveguide mode in EXAMPLE 4 is very small. As in the X-ray waveguide forming the periodic resonant waveguide mode controlled in the one-dimensional direction, the adjacent waveguide modes acting to reduce the selectivity of the periodic resonant waveguide mode as the objective waveguide mode also exist in an X-ray waveguide including a periodic structure that is controlled in two-dimensional directions like the periodic structure in EXAMPLE 4. Those adjacent waveguide modes are waveguide modes being resonant with the core width. Therefore, it is possible to further attenuate the X-rays in the adjacent waveguide modes and to propagate the X-ray in the periodic resonant waveguide mode with high selectivity by setting a periodic number changing boundary 1106 in the periodic structure of the X-ray waveguide of EXAMPLE 4. In Fig. 11A, a region denoted by dotted lines represents a core region that corresponds to a region 1110 before change of the periodic number, and a region denoted by one-dot-chain lines represents a core region that corresponds to a region 1111 after change of the periodic number in the guiding direction. The lengths of the region 1110 before change of the periodic number and the region 1111 after change of the periodic number in the guiding direction are each 0.5 mm. Between both the sides of the periodic number changing boundary 1106, a core width 1103 of about 970 nm corresponding to 120 periods in the x-direction in the region 1110 before change of the periodic number is changed to a core width 1107 of about 890 nm corresponding to 110 periods in the x-direction in the region 1111 after change of the periodic number. Such a change is given as the sum of a width 1108 corresponding to 5 periods of the periodicity in the x-direction and a width 1109 corresponding to another 5 periods of the periodicity in the x-direction. Moreover, dotted lines 1114 in Fig. 11B represent equi-period planes in the x-direction. In the region 1107 after change of the periodic number, therefore, the periodic resonant waveguide mode can selectively be propagated while the adjacent waveguide modes are abruptly attenuated. Since the periodic resonant waveguide mode formed in the X-ray waveguide of EXAMPLE 4 and controlled in the two-dimensional directions has characteristics of high unity and coherence over an entire large cross-section of the core, the X-ray waveguide of EXAMPLE 4 can form an X-ray having high spatial coherence over an entire wide cross-section region.

A process of fabricating the X-ray waveguide of EXAMPLE 4 is described below. After forming a tungsten film of about 20 nm on the Si substrate 1101 by sputtering, mesoporous silica is formed on the tungsten film by the sol-gel process. The mesoporous silica is then patterned by photolithography and etching, to thereby form the core region corresponding to the region 1110 before change of the periodic number and the core region corresponding to the region 1111 after change of the periodic number. Then, tungsten is deposited by sputtering to form an uppermost cladding film made of tungsten and having a thickness of about 30 nm, whereby the X-ray waveguide of EXAMPLE 4 can be fabricated.

EXAMPLE 5

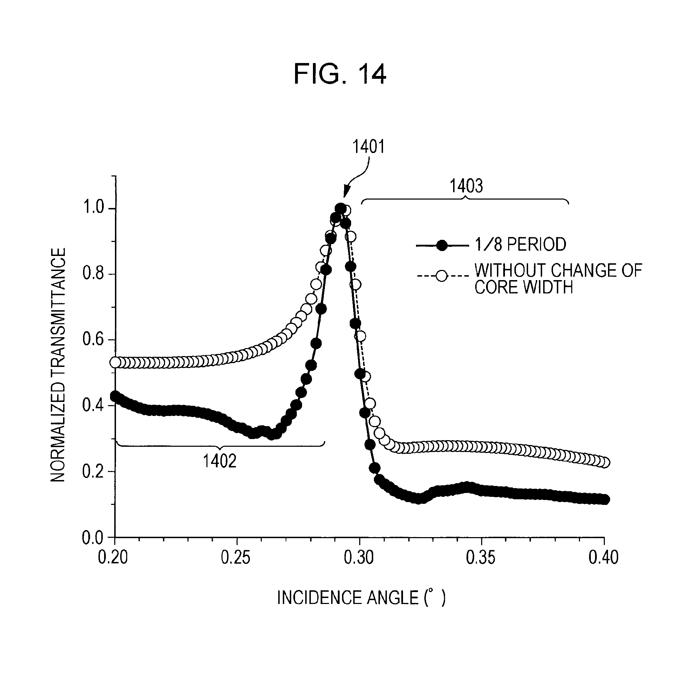

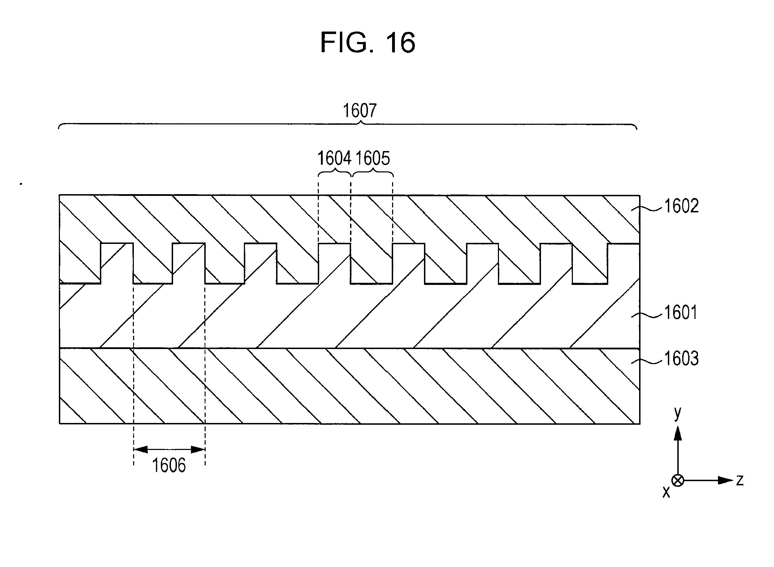

An X-ray waveguide according to EXAMPLE 5 of the present invention will be described below with reference to Fig. 16. The X-ray waveguide of EXAMPLE 5 includes claddings 1602 and 1603 each made of tungsten, and a core 1601 sandwiched between the claddings 1602 and 1603. A core width is periodically changed in a guiding direction that is the z-direction. The core is in the form of a periodic multilayer film in which a layer of aluminum oxide ($Al_2O_3$) with a thickness of 3 nm and a layer of boron carbide ($B_4C$) with a thickness of 12 nm are laminated in the y-direction. The periodic multilayer film has a periodic number of 100 in a region 1604 having a larger periodic number and a periodic number of 80 in a region 1605 having a smaller periodic number. An effective propagation angle of an X-ray having photon energy of 8 keV, which forms the periodic resonant waveguide mode in the X-ray waveguide of EXAMPLE 5, is about 0.295(°). On condition that total reflection is repeated in the larger periodic number region 1604 of the core, a repetition period of the total reflection is 73 $\mu$m. An overall length 1607 of the X-ray waveguide of EXAMPLE 5 is equal to eight times the repetition period of the total reflection, i.e., 584 $\mu$m. A unit period 1606 at which the core width is changed is 1/8 of the overall length of the X-ray waveguide, i.e., 73 $\mu$m. Fig. 14 is a graph representing dependency of transmittance on an incidence angle in the z-direction on a y-z plane when the X-ray having photon energy of 8 keV is incident upon an end surface of the X-ray waveguide of EXAMPLE 5. Black and white circles represent, respectively, the transmittances obtained with the X-ray waveguide of EXAMPLE 5 and an X-ray waveguide having the same length, but including no change of the core width. The transmittances are each normalized on the basis of maximum intensity thereof. As seen from Fig. 14, in the X-ray waveguide of EXAMPLE 5, around a peak 1401 representing transmission of the X-ray in the periodic resonant waveguide mode, transmissions of X-rays in other waveguide modes represented by 1402 and 1403 are suppressed and the selectivity of the periodic resonant waveguide mode is increased in comparison with the X-ray waveguide including no change of the core width.

The above-described X-ray waveguides according to the embodiments of the present invention can be each employed in X-ray optical technique fields as a component that is used, for example, in an X-ray optical system for handling an X-ray output from a synchrotron, and in X-ray optical systems for, e.g., X-ray imaging technology and X-ray exposure technology.

Furthermore, each of the above-described X-ray waveguides according to the embodiments of the present invention can form a waveguide mode having high selectivity as the objective waveguide mode and having coherence over a wide cross-section of the core, and can realize an X-ray having high spatial coherence.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An X-ray waveguide including a cladding (701,702; 902, 903; 1002, 1003; 1102; 1301, 1302; 1502, 1503; 1505, 1506; 1602, 1603) and a core (1303; 1501; 1504; 1601) to guide an X-ray,
   wherein the core includes a periodic structure, which is made of plural substances (703, 704; 904, 905; 1004, 1005; 1104, 1105; 1304, 1305) each having a different value of a real part of refractive index, in a direction perpendicular to an X-ray guiding direction,
   a Bragg angle determined depending on a wavelength of the X-ray and periodicity of the periodic structure is smaller than a critical angle for total reflection of the X-ray at an interface between the core and the cladding,
   the Bragg angle is larger than a critical angle for total reflection of the X-ray at an interface between the plural substances constituting the periodic structure, and
   the core has two or more regions (705, 706; 907, 908; 1009, 1010; 1110, 1111; 1406. 1307) differing in periodic number of the periodic structure constituting the core with a core width in a direction of period being different between the two or more regions corresponding to change of the periodic number.

2. The X-ray waveguide according to Claim 1, wherein the two or more regions differing in periodic number of the core are periodically arranged in the X-ray guiding direction.

3. The X-ray waveguide according to Claim 2, wherein a period, in the X-ray guiding direction, of the two or more regions differing in periodic number of the core and being periodically arranged in the X-ray guiding direction is matched with a repetition period at which a fundamental wave is totally reflected at the interface between the core and the cladding in the X-ray guiding direction, the fundamental wave forming a waveguide mode that is formed in the waveguide and that is resonant with the periodic structure of the core.

4. The X-ray waveguide according to Claim 2, wherein a period, in the X-ray guiding direction, of the two or more regions differing in periodic number of the core and being periodically arranged in the X-ray guiding direction is a value obtained by multiplying or dividing, by a natural number, a repetition period at which a fundamental wave is totally reflected at the interface between the core and the cladding in the X-ray guiding direction, the fundamental wave forming a waveguide mode that is formed in the waveguide and that is resonant with the periodic structure of the core, the value being in a range of 1/100 to 10 times the repetition period.

5. The X-ray waveguide according to any one of Claims 1 to 4, wherein the periodic structure is a periodic multilayer film in which films made of plural substances having different refractive indices are laminated.

6. The X-ray waveguide according to Claim 5, wherein a thickness of each of the films constituting the periodic multilayer film is constant in the X-ray guiding direction.

7. The X-ray waveguide according to Claim 5 or 6, wherein the periodic multilayer film is a mesostructured material having a lamellar structure.

8. The X-ray waveguide according to any one of Claims 1 to 4, wherein the periodic structure is constituted as a mesostructured material made of a mesoporous material.

9. An X-ray waveguide system including at least an X-ray source and the X-ray waveguide according to any one of Claims 1 to 8 configured to guide an X-ray emitted from the X-ray source.

FIG. 1A

101 {
102
103
}

$\vec{a}$

y
x ← ⊗ z

FIG. 1B

106    105

$\vec{a_2}$
104
$\vec{a_1}$

y
x ← ⊗ z

FIG. 1C

109    108

$\vec{a_2}$
107
$\vec{a_1}$

y
x ← ⊗ z

# FIG. 2

# FIG. 3

# FIG. 4

# FIG. 5

# FIG. 6

$(Au/C(11.2\ nm)/Al_2O_3(2.8\ nm)\times25/Au)$

# FIG. 7

# FIG. 8A

# FIG. 8B

# FIG. 9

# FIG. 10A

# FIG. 10B

# FIG. 11A

# FIG. 11B

# FIG. 12

# FIG. 13

EP 2 600 354 A2

FIG. 14

FIG. 15A

1509

1502

1501

1503

1507

y
x z

FIG. 15B

1508

1505

1504

1510

1506

y
x z

# FIG. 16

EP 2 600 354 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Optics Communications,* 2008, vol. 281 (10), 2779

- *Optics Letters,* 2011, vol. 36 (14), 2602